## Europäisches Patentamt

(19) **European Patent Office**

**Office européen des brevets**

(11) Veröffentlichungsnummer: **0 216 075**
**B1**

(12) # EUROPÄISCHE PATENTSCHRIFT

(45) Veröffentlichungstag der Patentschrift:
**20.04.88**

(51) Int. Cl.⁴: **B 65 G 69/28**

(21) Anmeldenummer: **86110405.7**

(22) Anmeldetag: **28.07.86**

(54) **Fahrbare Rampe.**

(30) Priorität: **01.08.85 DE 3527637**

(43) Veröffentlichungstag der Anmeldung:
**01.04.87 Patentblatt 87/14**

(45) Bekanntmachung des Hinweises auf die Patenterteilung:
**20.04.88 Patentblatt 88/16**

(84) Benannte Vertragsstaaten:
**AT BE CH DE FR GB IT LI LU NL SE**

(56) Entgegenhaltungen:
**DE - A - 2 604 743**
**DE - C - 724 808**
**DE - U - 6 753 140**
**US - A - 3 071 267**

(73) Patentinhaber: **Alten, Kurt, Ringstrasse 14,
D-3015 Wennigsen (DE)**

(72) Erfinder: **Alten, Kurt, Ringstrasse 14, D-3015 Wennigsen
(DE)**

(74) Vertreter: **Depmeyer, Lothar, Auf der Höchte 30,
D-3008 Garbsen 1 (DE)**

ACTORUM AG

## Beschreibung

Die Erfindung betrifft eine fahrbare Rampe, insb. eine Schrägrampe, und zwar vorzugsweise zum Be- und Entladen von Fahrzeugen, wobei die Rampe mit einer stirnseitig angeordneten Deichsel versehen ist, die es ermöglicht, die Rampe an ein Motorfahrzeug anzuhängen (bekannt aus DE-C-724 808).

Der Erfindung liegt die Aufgabe zugrunde, die obigen Rampen so auszubilden, dass die Deichsel beim Gebrauch der Rampe den Rampenbetrieb nicht behindert und es durch einfache manuelle Massnahmen möglich ist, die Deichsel in die Betriebsstellung zu bringen.

Zur Lösung dieser Aufgabe ist erfindungsgemäss die Deichsel von ihrer Wirkstellung aus — sie erstreckt sich dabei in Rampenlängsrichtung — in eine Querstellung verschwenkbar und zudem ist ein um eine Querachse verschwenkbares Auffahrtblech vorgesehen, das in der Wirkstellung die in der Querstellung befindliche Deichsel überdeckt und zur Benutzung der Deichsel nach oben verschwenkbar ist. Dabei versteht es sich, dass geeignete Sicherungen vorgesehen sein müssen, um die Deichsel und das Auffahrtblech in den verschiedenen Stellungen zu fixieren, was durch Arretierbolzen, Einrastungen oder ähnliche Massnahmen geschehen kann.

Demgemäss überdeckt das Auffahrtblech die Deichsel, wenn sich diese in ihrer Ruhestellung befindet. Die Deichsel kann jedoch nur dann in ihre Arbeitsstellung bewegt werden und diese Stellung einnehmen, wenn das Auffahrtblech eine zum Verschwenken der Deichsel ausreichende Schwenkstellung eingenommen hat.

Weitere Einzelheiten der Erfindung werden anhand der Zeichnung erläutert, in der ein Ausführungsbeispiel der Erfindung dargestellt ist.

Es zeigen:

Fig. 1 eine Schrägrampe, die verfahrbar ist und sich in der Betriebsstellung befindet, in der Seitenansicht,

Fig. 2 eine Teildraufsicht auf das mit der Deichsel versehene Ende der Rampe und

Fig. 3 das mit der Deichsel ausgestattete Rampenende in der Seitenansicht in der Wirkstellung der Rampe.

Der Hauptbestandteil der Rampe ist eine langgestreckte Brückenplatte 1 mit der Fahrbahn 2 und seitlichen Erhöhungen 3.

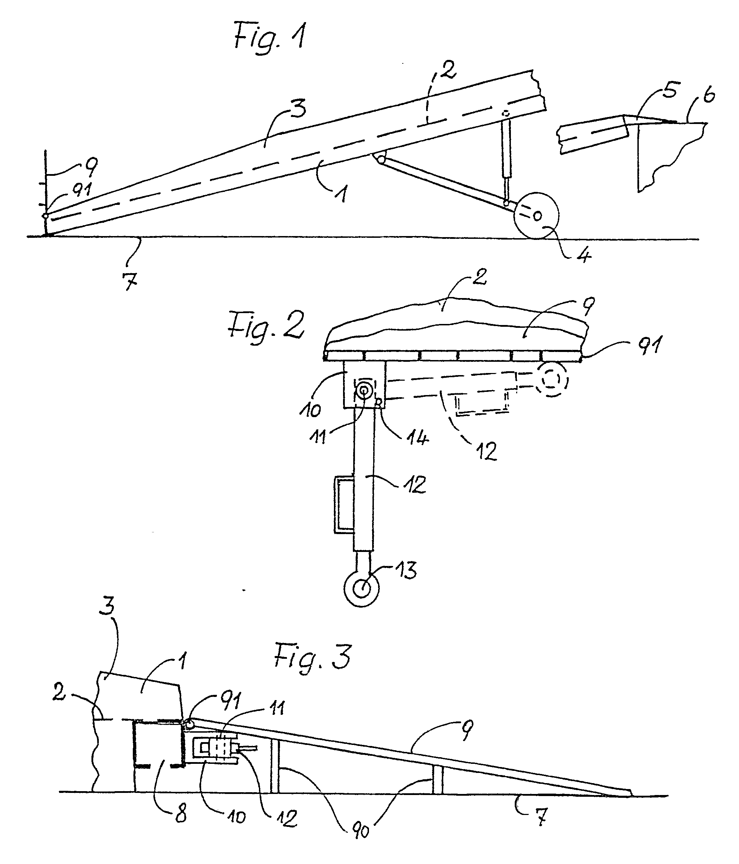

Etwa mittig, auf halber Länge ist die Brückenplatte 1 von einem Fahrwerk 4 unterstützt. Am vorderen Ende der Brückenplatte 1 befindet sich eine Stütze 5 zum Auflegen auf die zu be- bzw. entladende Plattform 6, am gegenüberliegenden, zur Auflage auf der Fahrbahn 7 bestimmten Ende der Rampe ein hohl gehaltener Querträger 8, an dem ein Auffahrtblech 9 mit Stützkörpern 90 mittels Scharnier 91 angelenkt ist. Gemäss Fig. 3 befindet sich das Auffahrtblech 9 in der Betriebsstellung. Es kann zum Befahren der Rampe überfahren werden und so den Rampenbetrieb sicherstellen.

An der Stirnseite des Rampenendes, das von dem Querträger 8 gebildet ist, befindet sich eine u-förmige Lagerstelle 10 mit senkrechtem Lagerbolzen 11 für die schwenkbare Anordnung einer Deichsel 12 mit Öse 13. Gemäss Fig. 2 befindet sich die Deichsel 12 in der Betriebsstellung. Dort ist sie mit einem Steckbolzen 14 an der Lagerstelle 10 gesichert. In dieser Stellung der Deichsel 12 ist das Auffahrtblech 9 hochgeklappt mit einem Schwenkweg von etwa 180-200°; dabei liegt das Auffahrtblech 9 auf der Brückenplatte 1 auf, jedoch ist auch eine Steilstellung gemäss Fig. 1 möglich, die jedoch eine Sicherung z.B. in Form eines Schnappverschlusses od. dgl. voraussetzt, um eine Lageveränderung des Auffahrtbleches 9 beim Verfahren der Rampe auszuschliessen.

Befindet sich das Auffahrtblech 9 gemäss Fig. 3 in der Betriebsstellung, so ist die Deichsel 12 um 90° verschwenkt, wobei sie sich gemäss Fig. 2 in einer Querlage befindet und dem heruntergeklappten Auffahrtblech 9 nicht hinderlich sein kann.

Fehlbedienungen der Rampe sind ausgeschlossen, weil die Teile 9 und 12 nur dann in die Betriebsstellung verbracht werden können, wenn sich das andere Teil in der Ruhestellung befindet. Hinzu kommt, dass beim Überfahrbetrieb die Deichsel 12 geschützt unterhalb des Auffahrtbleches liegt und weiterhin das Auffahrtblech 9 beim Rangieren nicht durch Anstossen od. dgl. beschädigt werden kann, weil es hochgeklappt ist.

## Patentansprüche

1. Fahrbare Rampe, insb. Schrägrampe, vorzugsweise zum Be- und Entladen von Fahrzeugen, mit einer stirnseitig angeordneten, sich im wesentlichen in Rampenlängsrichtung erstreckenden Deichsel, dadurch gekennzeichnet, dass die Deichsel (12) von ihrer Wirkstellung in eine Querlage in bezug auf die Rampenlängsrichtung verschwenkbar und im verschwenkten Zustand von einem Auffahrtblech (9) überdeckt ist, das zum Gebrauch der Deichsel nach oben schwenkbar ist.

2. Rampe nach Anspruch 1, dadurch gekennzeichnet, dass das Auffahrtblech um etwa 180-200° verschwenkbar ist.

3. Rampe nach Anspruch 1, dadurch gekennzeichnet, dass das Auffahrtblech nach Erreichen einer Steilstellung eine selbsttätige Fixierung erfährt.

4. Rampe nach Anspruch 1, dadurch gekennzeichnet, dass die Deichsel (12) in der Querstellung feststellbar ist.

5. Rampe nach Anspruch 1, dadurch gekennzeichnet, dass die Deichsel (12) in bekannter Weise mittig an der Stirnseite der Rampe befestigt ist.

6. Rampe nach Anspruch 1, dadurch gekennzeichnet, dass die Deichsel (12) und das Auffahrtblech (9) gemeinsam an einem Querträger (8) der Rampe befestigt sind.

## Revendications

1. Rampe mobile, notamment rampe inclinée, de préférence pour charger et pour décharger des véhicules, comprenant une barre (12) disposée du côté frontal et s'étendant sensiblement dans la direction longitudinale de la rampe, caractérisée en ce que la barre (12) est montée basculante de sa position active à une position transversale par rapport à la direction longitudinale de la rampe et est recouverte, lorsqu'elle a basculé, d'une tôle d'accès (9), qui, pour l'utilisation de la barre (12), peut basculer vers le haut.

2. Rampe suivant la revendication 1, caractérisée en ce que la tôle d'accès est montée basculante de 180 à 200° environ.

3. Rampe suivant la revendication 1, caractérisée en ce que la tôle d'accès s'immobilise automatiquement après avoir atteint une certaine position inclinée.

4. Rampe suivant la revendication 1, caractérisée en ce que la barre (12) peut être bloquée dans la position transversale.

5. Rampe suivant la revendication 1, caractérisée en ce que la barre (12) est fixée, d'une manière en soi connue, au milieu du côté frontal de la rampe.

6. Rampe suivant la revendication 1, caractérisée en ce que la barre (12) et la tôle d'accès (9) sont fixées en commun sur une traverse (8) de la rampe.

**Claims**

1. Mobile ramp, especially an inclined ramp, preferably for loading and unloading vehicles, having a rod which is disposed on the end face and extends substantially in the longitudinal direction of the ramp, characterised in that the rod (12) is pivotable from its operative position into a transverse position in relation to the longitudinal direction of the ramp and is covered, in the pivoted state, by a sliding platform (9) which is upwardly pivotable for utilisation of the rod.

2. Ramp according to claim 1, characterised in that the platform is pivotable through substantially 180°-200°.

3. Ramp according to claim 1, characterised in that the platform is automatically secured upon attainment of a steep position.

4. Ramp according to claim 1, characterised in that the rod (12) is securable in the transverse position.

5. Ramp according to claim 1, characterised in that the rod (12) is centrally mounted in known manner on the end face of the ramp.

6. Ramp according to claim 1, characterised in that the rod (12) and the platform (9) are jointly mounted on a transverse support (8) of the ramp.

*Fig. 1*

*Fig. 2*

*Fig. 3*